# EUROPÄISCHE PATENTSCHRIFT

(11) **EP 1 655 068 B1**
(45) Veröffentlichungstag und Bekanntmachung des Hinweises auf die Patenterteilung: **25.03.2020**
(21) Anmeldenummer: 04026105.9
(22) Anmeldetag: 04.11.2004
(51) Int. Cl.: B01J 12/00, H01M 10/52

(54) **REKOMBINATOR**
RECOMBINATOR
RECOMBINATEUR

(43) Veröffentlichungstag der Anmeldung: 10.05.2006
(73) Patentinhaber: HOPPECKE Batterien GmbH & Co. KG., 59929 Brilon (DE)
(72) Erfinder: RIEGEL, Bernhard, 59929 Brilon (DE); RUCH, Jean, 59929 Brilon (DE); CATTANEO, Eduardo, 59929 Brilon-Rösenbeck (DE)
(74) Vertreter: Rausch Wanischeck-Bergmann Brinkmann

(56) Entgegenhaltungen:
- WO-A-2004/025768
- FR-A- 2 295 583
- US-A- 4 048 387

## Beschreibung

Die Erfindung betrifft einen Rekombinator mit einer Rekombinationseinrichtung zur katalytischen Rekombination von in Akkumulatoren entstehenden Wasserstoff und Sauerstoff zu Wasser.

Rekombinatoren sowie Rekombinationseinrichtungen der vorgenannten Art sind aus dem Stand der Technik an sich bekannt. Aus der US 4,048,387 A ist beispielsweise ein Rekombinator mit einer Rekombinationseinrichtung bekannt. Die Rekombinationseinrichtung weist ein Absorptionsmittel auf, das den Katalysator vergiftende Stoffe abfängt.

In der FR 2 295 583 A wird ein Rekombinator mit einem Behälter offenbart, an welchem durch die Katalysationsreaktion von Sauerstoff und Wasserstoff mit dem Katalysator das entstandene Wasser kondensiert.

Rekombinationseinrichtungen verfügen bekanntermaßen im Kernstück über einen Katalysator. Als Katalysatoren sind vor allem Platinmetalle bekannt, insbesondere Palladium, das in Form einer dünnen Schicht auf einen Trägerstab, welcher zum Beispiel aus Kupfer, Tonerde oder dergleichen bestehen kann, aufgetragen ist. Der auf diese Weise ausgebildete Katalysatorstab ist in eine Röhre aus porösem Material, beispielsweise einem gasdurchlässigen Keramikrohr zentrisch eingesetzt, wobei der in der Röhre zwischen Katalysatorstab und Röhreninnenfläche verbleibende freie Ringraum mit einem Absorptionsmaterial befüllt ist. Als Absorptionsmaterial kommen insbesondere Bleioxyde, Silberoxyde, Eisenoxyde, Kupferoxyde oder dergleichen in Betracht. Die den Katalysatorstab und das Absorptionsmaterial aufnehmende Röhre ist in aller Regel freistehend innerhalb eines aus einem gasdichten Material bestehenden Behälters, vorzugsweise eines Kunststoffbehälters, angeordnet, welcher Behälter an den Stirnseiten verschlossen ist. Der Behälter verfügt seinerseits über Rohrstutzen zum Anschluß an einen Akkumulator für die Gaszufuhr einerseits und den Wasserablauf andererseits. Mit seinen Anbauteilen bildet der Behälter zusammen mit der Rekombinationseinrichtung den Rekombinator aus.

Die bei einem Betrieb eines Akkumulators, insbesondere während eines Ladevorganges, entstehenden Gase Wasserstoff und Sauerstoff werden über den einen Rohrstutzen des Behälters in den Behälter geführt, passieren dort die poröse Röhre und das Absorptionsmaterial und werden alsdann am Katalysator zu Wasser rekombiniert. Die Rekombinationsreaktion ist exotherm, weshalb das am Katalysator rekombinierte Wasser in Form von Wasserdampf vorliegt. Der am Katalysator entstehende Wasserdampf schlägt sich alsdann an der Behälterinnenwandung nieder, kondensiert und fließt über den hierfür vorgesehenen Rohrstutzen zurück in den Akkumulator.

Der mit der Verwendung eines Rekombinators der vorbeschriebenen Art einhergehende Vorteil liegt auf der Hand. Die bei einem Akkumulatorbetrieb frei werdenden Gase Wasserstoff und Sauerstoff werden durch den Rekombinator zu Wasser rekombiniert, welches Wasser für den Akkumulator nicht verloren geht, sondern in den Elektrolyten des Akkumulators zurückgeführt wird. Es ist daher nicht erforderlich, destilliertes Wasser in den Elektrolyten des Akkumulators nachzufüllen. Insofern erweist sich ein je nach seiner Größe mit einem oder mehreren Rekombinatoren versehener Akkumulator als wartungsfrei.

Je nach Bauform und Baugröße des Akkumulators bzw. in Abhängigkeit des zur Verfügung stehenden Platzangebotes kann der Rekombinator entweder senkrecht oder längs zur Akkumulatoroberseite ausgerichtet ausgebildet sein. Bei längs, das heißt parallel zur Akkumulatoroberseite ausgerichteten Rekombinatoren ist allerdings von Nachteil, daß der oberhalb der Rekombinationseinrichtung an der Behälterinnenwand des Rekombinators kondensierende Wasserdampf Wassertropfen ausbildet, die der Schwerkraft folgend auf die Rekombinationseinrichtung abtropfen können. Hierdurch bedingt kann es zu einer Durchnässung der Rekombinationseinrichtung kommen, was in nachteiliger Weise zu einer Verminderung der Rekombinationsleistung der Rekombinationseinrichtung führt. Die Rekombinationsleistung wird zum einen dadurch vermindert, daß das den Katalysator und das Absorptionsmaterial umgebende poröse Material, welches beispielsweise aus Keramik besteht, verstopft. Die zu rekombinierenden Gase können nicht mehr ungehindert an den Katalysatorstab gelangen. Zudem kann es infolge des Heruntertropfens von sich an der Behälterinnenoberfläche bildenden Wassertropfen zu einer Durchnässung des Absorptionsmaterials kommen, was zu einem partiellen Funktionsausfall desselben führen kann. Auch insofern erweist sich die vorbeschriebene Anordnung als nachteilig.

Ausgehend vom vorgenannten Stand der Technik ist es **Aufgabe** der Erfindung, einen insbesondere längs zum Akkumulator ausgerichteten Rekombinator dahingehend weiterzubilden, daß etwaige Entzündungen verhindert werden.

Zur **Lösung** dieser Aufgabe wird mit der Erfindung vorgeschlagen ein Rekombinator gemäß Anspruch 1 vorschlagen.

Das erfindungsgemäße oberhalb der Rekombinationseinrichtung angeordnete Abschirmelement schützt die Rekombinationseinrichtung vor sich an der Behälterinnenwand ausbildenden und in Richtung auf die Rekombinationseinrichtung herabfallenden Wassertropfen. Eine ungewollte Durchnässung der Rekombinationseinrichtung durch herabfallende Wassertropfen kann so wirkungsvoll unterbunden werden.

Die vorbeschriebene Konstruktion eignet sich insbesondere für längs, das heißt parallel zur Oberseite des Akkumulators ausgerichtete Rekombinatoren, das heißt für solche Rekombinatoren, die nicht senkrecht zur Akkumulatoroberseite ausgerichtet angeordnet sind. Das Abschirmelement ist bei solchen längs ausgerichteten Rekombinatoren zwischen der Rekombinationseinrichtung und der darüber liegenden Behälterwand angeordnet. Anders als bei aus dem Stand der Technik bekannten Rekombinatoren tropft das sich an der Behälterinnenwand oberhalb der Rekombinationseinrichtung ausbildende Wasser nicht auf die Rekombinationseinrichtung zurück, sondern wird vielmehr von dem zwischen Rekombinationseinrichtung und Behälterwand angeordneten Abschirmelement abgefangen. Das vom Abschirmelement abgefangene Wasser wird von diesem um die Rekombinationseinrichtung herum abgeleitet und tropft von diesem - ohne daß die Gefahr einer Durchnässung der Rekombinationseinrichtung bestünde - ab. Das Abschirmelement wirkt insofern als eine Art Schutzhaube für die Rekombinationseinrichtung.

Das Abschirmelement ist aus einem korrosionsbeständigen Material gebildet und kann beispielsweise aus Keramik oder Kunststoff bestehen. Als Kunststoff kommt insbesondere ein hydrophobisierter, das heißt wasserabweisender Kunststoff in Frage, beispielsweise ein Elastomer. Das Abschirmelement verfügt optional über Durchtrittsöffnungen für den Wasserdampf, wobei die Durchtrittsöffnungen derart ausgestaltet bzw. dimensioniert sein können, daß das auf das Abschirmelement zurücktropfende Wasser nicht durch die Durchtrittsöffnungen hindurchtreten und zu der unterhalb des Abschirmelements angeordneten Rekombinationseinrichtung gelangen kann. Im Rahmen der Erfindung kann das Dachelement als Membran ausgebildet sein. In diesem Zusammenhang ist beispielsweise vorstellbar, daß das Abschirmelement aus einem porösen Keramikmaterial gebildet ist, das einerseits den an der Rekombinationseinheit entstehenden Wasserdampf durchläßt, andererseits aber von dem von der Behälterwand abtropfenden Wasser nicht passiert werden kann. In Ergänzung hierzu oder alternativ kann vorgesehen sein, daß das Abschirmelement auf seiner der Rekombinationseinrichtung abgewandten Seite mit einem Vliesmaterial bedeckt ist. Das Vliesmaterial sorgt in der schon vorbeschriebenen Weise dafür, daß der an der Rekombinationseinrichtung entstehende Wasserdampf das Abschirmelement bzw. das darauf angeordnete Vliesmaterial in Richtung der Behälterwand passieren kann, daß jedoch das von der Behälterwand zurück abtropfende Wasser vom Abschirmelement bzw. dem darauf angeordneten Vliesmaterial mit der Folge zurückgehalten wird, daß die Rekombinationseinrichtung vor einer ungewollten Durchnässung durch herabtropfendes Wasser geschützt ist.

Der von der Rekombinationseinheit bewirkte Rekombinationsprozeß verläuft exotherm. Um sicherzustellen, daß es infolge dieses exothermen Rekombinationsprozesses nicht zu einer ungewollten Entzündung des im Behälter des Rekombinators vorhandenen Wasserstoff-Sauerstoff-Gasgemisches (Knallgas) kommt, ist der Katalysator der Rekombinationseinheit von einem Absorptionsmaterial umgeben. Dieses Absorptionsmaterial, das den Schutz des Katalysators vor Vergiftung übernimmt, verhindert ebenfalls den unkontrollierten Kontakt zwischen Katalysator einerseits und Knallgasgemisch andererseits. Einer ungewollten Entzündung bzw. Explosion des Knallgasgemisches kann so sicher vorgebeugt werden. Gleichwohl ist der Einsatz eines aus Absorptionsmaterial bestehenden Absorbers nicht frei von Nachteilen. Dieser wird nämlich durch das im Rahmen des Rekombinationsprozesses frei werdende, rekombinierte Wasser durchnäßt, insbesondere dann, wenn das an der Behälterwand auskondensierte Wasser auf die Rekombinationseinheit abtropft. Eine Durchnässung des Absorptionsmaterials bewirkt aus zweierlei Gründen eine ungewollte Verlangsamung des Rekombinationsprozesses. Zum einen stellt das vom Absorptionsmaterial aufgenommene Wasser eine Barriere für das zu rekombinierende Wasserstoff-Sauerstoff-Gasgemisch dar. Dieses muß nämlich, um zwecks Rekombination den Katalysator bestimmungsgemäß zu erreichen, durch das vom Absorptionsmaterial aufgenommene Wasser hindurchdiffundieren. Der Vorgang des Hindurchdiffundierens ist äußerst zeitintensiv und damit langwierig, so daß die Rekombinationsleistung der gesamten Rekombinationseinrichtung bei durchnäßtem Absorptionsmaterial in nachteiliger Weise verringert wird. Zum anderen muß das das Absorptionsmaterial durchnässende Wasser erneut verdampft werden. Auch dieser Umstand führt dazu, daß die Rekombinationsleistung der gesamten Rekombinationseinheit in nachteiliger Weise vermindert wird. Die erfindungsgemäße Vorrichtung schafft hier Abhilfe. Durch das Abschirmelement wird nämlich sichergestellt, daß das an der Behälterwand auskondensierende Wasser nicht zurück auf die Rekombinationseinheit tropft und das Absorptionsmaterial durchnäßt. Das Abschirmelement schützt die Rekombinationseinheit vielmehr vor einer Durchnässung durch zurückabtropfendes Wasser, so daß das Absorptionsmaterial vergleichsweise trocken gehalten werden kann. Im Unterschied zu den aus dem Stand der Technik bekannten Rekombinatoren wird die Rekombinationsleistung des erfindungsgemäßen Rekombinators also nicht dadurch beeinträchtigt, daß das Absorptionsmaterial durch herabtropfendes, bereits rekombiniertes Wasser durchnäßt wird. Mit dem erfindungsgemäßen Abschirmelement kann das rekombinierte Wasser von der Rekombinationseinheit weitestgehend ferngehalten werden.

Um einen weitestgehenden Schutz der Rekombinationseinrichtung vor herabtropfendem Wasser sicherzustellen, weist das Abschirmelement gemäß einem weiteren Merkmal der Erfindung eine solche Längserstreckung auf, die im wesentlichen der der Rekombinationseinrichtung entspricht. Vorzugsweise wird die Rekombinationseinrichtung über ihre gesamte Längserstreckung vom Abschirmelement überdeckt.

Das Abschirmelement weist gemäß einem weiteren Merkmal der Erfindung eine im Querschnitt bogenförmige Kontur auf. Die bogenförmige Kontur kann im Querschnitt teilkreisförmig ausgebildet und damit an den Querschnitt des vorzugsweise zylinderförmig ausgebildeten Behälter des Rekombinators angepaßt sein. Unabhängig von der im Einzelfall zu wählenden Kontur des Abschirmelements kommt es aber allein darauf an, daß das Abschirmelement die Rekombinationseinrichtung nach Art eines Daches abdeckt, so daß die Rekombinationseinrichtung vor herabtropfendem Wasser geschützt ist. Die bogenförmige Ausgestaltungsform des Abschirmelements eignet sich insbesondere dann, wenn die Rekombinationseinrichtung, wie aus dem Stand der Technik an sich bekannt, stabförmig ausgebildet ist. Die Längsseiten des Abschirmelementes überragen die Rekombinationseinrichtung insoweit, als daß das vom Abschirmelement abgefangene Wasser in den Längsseiten des Abschirmelements seine von der Rekombinationseinrichtung weit genug entfernt liegenden Abtropfkanten findet. Dabei können die Längsseiten des Abschirmelements gemäß einem weiteren Merkmal der Erfindung jeweils einen eine Wassersammelrinne bildenden Fortsatz tragen. Das vom Abschirmelement abgefangene Wasser sammelt sich gemäß dieser Ausgestaltungsform der Erfindung in den längsseitig am Abschirmelement angeordneten Wassersammeirinnen, über welche es abtransportiert werden kann. Um einen solchen Abtransport des in den Wassersammeirinnen aufgefangenen Wassers zu erleichtern, kann das Abschirmelement unter Gefälle zur Horizontalen ausgerichtet sein. Der Schwerkraft folgend fließt das in den Wassersammelrinnen angesammelte Wasser dann in Richtung des abfallenden Gefälles ab.

Gemäß einem weiteren Merkmal der Erfindung kann vorgesehen sein, daß die Rekombinationseinrichtung, insbesondere das den Katalysator umgebende Absorptionsmaterial beheizbar ist. Sich am Absorptionsmaterial unter Umständen ansammelndes Wasser kann so in Wasserdampf zurückgewandelt, das heißt reaktiviert werden. Auf diese Weise ist sichergestellt, daß auch eine beispielsweise durch Wasserdampf bewirkte Durchnässung des Absorptionsmaterials verhindert werden kann. Alternativ zur Beheizung der Rekombinationseinrichtung kann auch vorgesehen sein, daß der vom Behälter des Rekombinators umgebende Volumenraum beheizbar ist. Auch auf diese Weise läßt sich vom Absorptionsmaterial unter Umständen aufgenommenes Wasser in Wasserdampf zurückverwandeln, das heißt reaktivieren. Gemäß einem besonderen Merkmal der Erfindung kann das Abschirmelement als Träger für eine entsprechende Heizeinrichtung dienen. Auch kann vorgesehen sein, daß das Abschirmelement selbst als Heizeinrichtung ausgebildet ist. Vorstellbar in diesem Zusammenhang ist beispielsweise, daß als Heizeinrichtung eine Widerstandsheizeinrichtung eingesetzt wird, die nach Art einer Folie ausgebildet und auf das Abschirmelement aufgeklebt ist. Bei Bedarf kann die Heizeinrichtung eingeschaltet und dazu benutzt werden, den vom Behälter des Rekombinators umschlossenen Volumenraum aufzuheizen. Die Einschaltung der Heizeinrichtung kann gemäß einem weiteren Merkmal der Erfindung auch automatisch erfolgen. Dies könnte beispielsweise durch eine einen Sensor umfassende Steuereinrichtung bewerkstelligt werden, wobei als Sensor beispielsweise ein Feuchtigkeitssensor, ein Temperatursensor oder ein Drucksensor in Frage kommt. Da nämlich der Rekombinationsprozeß exotherm abläuft, können neben der Feuchtigkeit auch die Parameter Temperatur und/oder Druck darüber Aufschluß geben, wie sich der momentan ablaufende Rekombinationsprozeß darstellt, bzw. ob die bezüglich eines wunschgemäß zu erreichenden Rekombinationsprozesses einzuhaltenden Sollparameter erreicht werden oder nicht. Falls nein, kann über die Steuer- bzw. Regeleinrichtung ein Einschalten der Heizeinrichtung automatisch bewirkt werden. Sobald über den vorgesehenen Sensor erfaßt, die wunschgemäß zu erzielenden Prozeßparameter erreicht sind, kann über die Steuer- bzw. Regeleinrichtung die Heizeinrichtung automatisch wieder abgeschaltet werden.

Weitere Vorteile und Merkmale der Erfindung ergeben sich aus der Beschreibung anhand der nachfolgenden Figuren. Dabei zeigen:
- Fig. 1: in schematischer Seitenansicht einen Rekombinator gemäß der Erfindung und
- Fig. 2: in einer schematischen Schnittdarstellung den erfindungsgemäßen Rekombinator nach Fig. 1, und zwar entlang der Schnittlinie II-II.

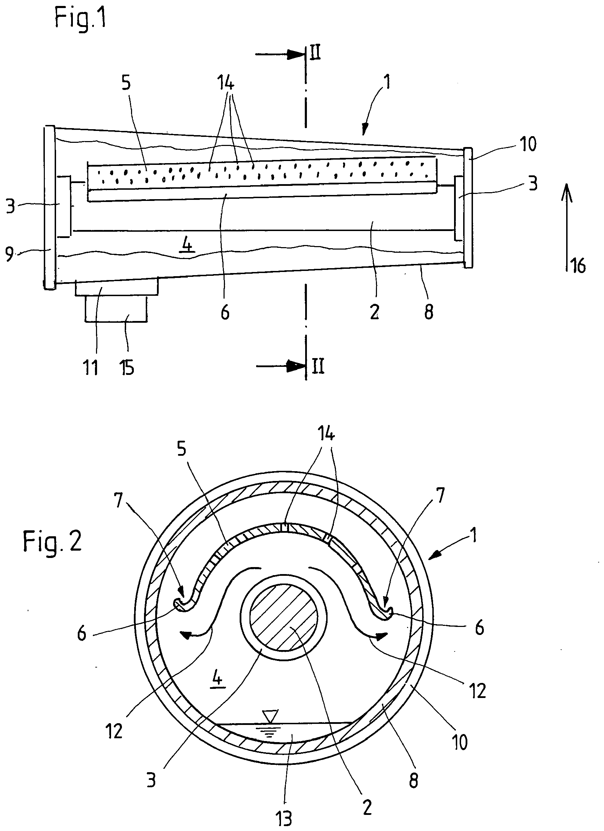

Fig. 1 zeigt den erfindungsgemäßen Rekombinator 1 in einer teilgeschnittenen Seitenansicht. Der Rekombinator 1 besteht in an sich bekannter Weise aus einem Anschlußstutzen 15, einem in Höhenrichtung 16 darüber liegenden Stutzenelement 11 sowie einem aus einem gasdichten Material bestehenden Behälter 8. Am Anschlußstutzen 15 können in der Fig. nicht dargestellte Nocken angeformt sein, um in einer Art einer Bajonettverbindung den Rekombinator 1 an der Zellenöffnung eines in der Fig. nicht gezeigten Akkumulators anzuordnen. Zwecks Anordnung an einem Akkumulator kann zudem ein in der Fig. nicht dargestellter Aufsetzflansch zwischen Anschlußstutzen 15 einerseits und Stutzenelement 11 andererseits angeordnet sein. Der Anschlußstutzen 15 kann zudem eine in der Fig. nicht dargestellte Dichtung tragen.

Innerhalb des vom Behälter 8 umschlossenen Volumenraums 4 ist eine stabförmig ausgebildete Rekombinationseinrichtung 2 angeordnet. Getragen wird die Rekombinationseinrichtung 2 von zwei Sockeln 3, die die Rekombinationseinrichtung 2 in Bezug auf die Blattebene nach Fig. 1 links- und rechtsseitig aufnehmen. Die Sockel 3 können beispielsweise als Rohrstutzen ausgebildet sein, in die die Rekombinationseinrichtung 2 lagesicher eingeführt werden kann. Der in Blattebene nach Fig. 1 linke Sockel 3 wird von einer Verschlußkappe 9 getragen, die den Behälter 8 linksseitig verschließt. In gleicher Weise ist der in Blattebene rechte Sockel 3 an der Verschlußkappe 10 angeordnet, die den Behälter 8 verschließt.

Die Verschlußkappe 9 und der Behälter 8 sind vorzugsweise als einstückiges Bauteil ausgebildet und bestehen aus Kunststoff. Nach einem Einbringen der Rekombinationseinrichtung 2 in den von der Verschlußkappe 9 getragenen Sockel 3 wird der Behälter 8 anderendseitig mittels der Verschlußkappe 10 verschlossen, wobei der in Blattebene rechte Abschnitt der Rekombinationseinrichtung 2 in den Stutzen 3 der Verschlußkappe 10 zu liegen kommt. Für eine sichere Festlegung der Verschlußkappe 10 gegenüber dem Behälter 8 können entweder am Behälter 8 oder an der Verschlußkappe 10 entsprechende Verriegelungs- und/oder Rastmittel vorgesehen sein.

Der Rekombinator 1 verfügt zudem über eine in den Fign. nicht dargestellte Überdruckleitung, bzw. über einen Überdruckkanal. Eine solche Überdruckleitung bzw. ein solcher Überdruckkanal dient dazu, einen etwaig im Rekombinator 1 entstehenden Überdruck dadurch abzubauen, daß das im Rekombinator 1 befindliche Gasgemisch zum Teil an die den Akkumulator umgebende Atmosphäre abgegeben wird. Zur Zündsicherung verfügt der Rekombinator 1 über eine Zündrückschlagsicherung, beispielsweise in Form einer Fritte oder eines Ventils. Eine solche Fritte bzw. ein solches Ventil ist in dem Überdruckkanal bzw. der Überdruckleitung anzuordnen und sorgt dafür, daß eine etwaige Entzündung des an die den Akkumulator umgebende Atmosphäre abgegebenen Knallgasgemisches nicht auf den Rekombinator 1 oder den Akkumulator zurückschlägt.

Wie Fig. 1 deutlich zu erkennen läßt, ist der Rekombinator 1 und damit die innerhalb des Behälters 8 angeordnete Rekombinationseinrichtung 2 längs, das heißt parallel verlaufend zu einem in der Fig. nicht dargestellten Akkumulator ausgerichtet. Die über den Anschlußstutzen 15 in den Volumenraum 4 des Rekombinators 1 gelangenden Gase Wasserstoff und Sauerstoff werden mittels der Rekombinationseinrichtung 2 in an sich bekannter Weise zu Wasser rekombiniert. Im Rahmen des Rekombinationsvorganges bildet sich am Katalysator der Rekombinationseinheit 2 Wasserdampf aus, der sich nahezu gleichmäßig innerhalb des Volumenraums 4 verteilt und nach Abkühlung an der Behälterinnenwand zu Wasser auskondensiert. Dabei bilden sich auch an der in Höhenrichtung 16 direkt oberhalb der Rekombinationseinrichtung 2 angeordneten Behälterwand Wassertropfen aus, die der Schwerkraft folgend in Richtung der Rekombinationseinrichtung 2 abtropfen. Um zu verhindern, daß die Rekombinationseinrichtung 2 durch herabfallende Wassertropfen durchnäßt wird, ist erfindungsgemäß in Höhenrichtung 16 oberhalb der Rekombinationseinrichtung 2 ein Abschirmelement 5 angeordnet. Dieses Abschirmelement 5 sorgt dafür, daß an der Innenoberseite des Behälters 8 auskondensiertes Wasser nicht zurück auf die Rekombinationseinrichtung 2 tropft, sondern vielmehr vom Abschirmelement 5 abgefangen und um die Rekombinationseinrichtung 2 herum geführt wird.

Das Abschirmelement 5 besteht aus einem korrosionsbeständigen Material, beispielsweise Kunststoff oder Keramik, und weist beispielhaft die in Fig. 2 gezeigte Querschnittskontur auf.

Gemäß der beispielhaften Ausgestaltungsform nach Fig. 2 ist das Abschirmelement 5 im Querschnitt bogenförmig ausgebildet. Mit Bezug auf das von der Behälterinnenoberfläche abtropfende Wasser überdeckt das Abschirmelement 5 die Rekombinationseinrichtung 2 vollständig, wie anhand von Fig. 2 gut zu erkennen ist. Das vom Abschirmelement 5 aufgefangene Wasser perlt an diesem ab und wird in Richtung der Längsseiten des Abschirmelements 5 befördert, von wo aus es abtropfen kann. Das sich innerhalb des Behälters 8 ansammelnde Wasser ist in Fig. 2 beispielhaft mit dem Bezugszeichen 13 identifiziert.

Optional können die Längsseiten des Abschirmelements 5, wie in Fig. 2 dargestellt, Fortsätze 6 tragen, die eine Wassersammelrinne 7 ausbilden. Das Abschirmelement 5 ist, wie Fig. 1 zeigt, zur Horizontalen geneigt ausgebildet, so daß das vom Abschirmelement insbesondere in den Wasserrinnen 7 aufgenommene Wasser in Richtung des Anschlußstutzens 15 abgeführt wird.

Der an der Rekombinationseinrichtung 2 infolge der Rekombination von Wasserstoff und Sauerstoff entstehende Wasserdampf strömt, wie beispielhaft in Fig. 2 anhand der Pfeile 12 dargestellt, um das Abschirmelement 5 herum und gelangt so an die Behälterinnenwand, wo der Wasserdampf zu Wasser kondensiert. In diesem Zusammenhang kann gemäß einem optionalen Vorschlag der Erfindung vorgesehen sein, daß das Abschirmelement 5 über Durchtrittsöffnungen 14 verfügt. Diese Durchtrittsöffnungen 14 sind nach Art und Größe derart ausgebildet, daß sie zwar den an der Rekombinationseinrichtung 2 freiwerdenden Wasserdampf durchlassen, das auf das Abschirmelement 5 zurücktropfende Wasser durch sie jedoch nicht hindurchströmen kann. Durch diese Ausgestaltung ist sichergestellt, daß der an der Rekombinationseinrichtung entstehende Wasserdampf in Höhenrichtung 16 direkt abgeführt und das Abschirmelement 5 durchströmen kann. Das auf das Abschirmelement 5 zurücktropfende Wasser kann die Durchtrittsöffnungen 14 hingegen nicht passieren, so daß das Abschirmelement 5 die Rekombinationseinrichtung 2 wirksam vor einer ungewollten Durchnässung schützt. In Kombination oder alternativ zu dieser Ausgestaltungsform kann vorgesehen sein, daß das Abschirmelement 5 auf seiner der Rekombinationseinrichtung abgewandten Oberseite mit einem wasserdampfdurchlässigen Material, beispielsweise einem Vliesmaterial, bestückt ist. In schon vorbeschriebener Weise sorgt auch das Vliesmaterial dafür, daß auf das Abschirmelement 5 zurücktropfendes Wasser von diesem aufgenommen bzw. abgeleitet wird. Wasserdampf kann das Vliesmaterial hingegen durchströmen, so daß es nicht zu einer ungewollten Kondensation des Wasserdampfs auf der der Rekombinationseinrichtung 2 zugewandten Unterseite des Abschirmelements 5 kommt. Alternativ zur Verwendung eines Vliesmaterials kann das Dachelement auch als Membran ausgebildet sein. Als Material für eine solche Membran eignet sich beispielsweise Sympatex, das dampfdurchlässig, aber flüssigkeitsundurchlässig ist.

### Bezugszeichenliste

- 1: Rekombinator
- 2: Rekombinationseinrichtung
- 3: Sockel
- 4: Volumenraum
- 5: Abschirmelement
- 6: Fortsatz
- 7: Rinne
- 8: Behälter
- 9: Verschlußkappe
- 10: Verschlußkappe
- 11: Stutzenelement
- 12: Pfeil
- 13: Wasser
- 14: Durchgangsbohrung
- 15: Anschlußstutzen
- 16: Höhenrichtung

## Patentansprüche

1. Rekombinator mit einer Rekombinationseinrichtung (2) zur katalytischen Rekombination von in Akkumulatoren entstehendem Wasserstoff und Sauerstoff zu Wasser, wobei der Rekombinator einen Behälter (8) aufweist, und mit einem oberhalb der Rekombinationseinrichtung (2) angeordneten Abschirmelement (5), und einem Überdruckkanal, **dadurch gekennzeichnet, dass** in dem Überdruckkanal eine Fritte angeordnet ist.

## Claims

1. A recombinator comprising a recombination device (2) for the catalytic recombination of hydrogen and oxygen generated in accumulators, to form water, wherein the recombinator comprises a container (8), and comprising a shielding element (5) arranged above the recombination device (2), and an overpressure channel, **characterized in that** a frit is placed in the overpressure channel.

## Revendications

1. Recombinateur comprenant un dispositif de recombinaison (2) pour la recombinaison catalytique d'hydrogène et d'oxygène générés dans des accumulateurs pour former de l'eau, le recombinateur comprenant un récipient (8), et comprenant un élément de blindage (5) disposé au-dessus du dispositif de recombinaison (2), et un canal de surpression, **caractérisé en ce qu'**une fritte est disposée dans le canal de surpression.
